# FASCICULE DE BREVET EUROPEEN

(11) **EP 2 736 776 B1**
(45) Date de publication et mention de la délivrance du brevet: **14.06.2017**
(21) Numéro de dépôt: 12758999.2
(22) Date de dépôt: 27.07.2012
(51) Int. Cl.: B60S 1/40, B60S 1/38

(54) **ADAPTATEUR D'ESSUIE-GLACE A POSITION DE SECURITE**
SCHEIBENWISCHERADAPTER MIT SICHERHEITSPOSITION
WINDSCREEN WIPER ADAPTER WITH SAFETY POSITION

(30) Priorité: 27.07.2011 FR 1156876
(43) Date de publication de la demande: 04.06.2014
(73) Titulaire: Valeo Systèmes d'Essuyage, 78322 Le Mesnil Saint Denis (FR)
(72) Inventeur: BOUSSET, Xavier, F-63115 Mezel (FR); GRASSO, Giuseppe, F-63340 Le Breuil sur Couze (FR)
(74) Mandataire: Léveillé, Christophe
(86) Numéro de dépôt international: PCT/EP2012/003216
(87) Numéro de publication internationale: WO 2013/013835

(56) Documents cités:
- DE-A1-102008 049 272
- DE-A1-102009 029 458
- DE-U1-202004 012 300
- US-A1- 2006 059 647

## Description

Le domaine de la présente invention est celui des équipements pour les véhicules, et plus particulièrement celui des équipements pour l'essuyage du pare-brise des automobiles.

Les automobiles sont couramment équipées de systèmes d'essuie-glace pour assurer un lavage du pare-brise et éviter que la vision qu'a le conducteur de son environnement soit perturbée. Ces essuie-glaces comprennent classiquement un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée "flat blade" (pour "balai plat"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions le balai est rattaché au bras tournant de l'essuie-glace par un dispositif de fixation constitué d'un connecteur et d'un adaptateur. Le connecteur est une pièce qui est sertie directement sur la lame racleuse ou directement sur le flat blade alors que l'adaptateur est une pièce intermédiaire qui permet la fixation du connecteur sur le bras de l'essuie-glace. Ces deux pièces sont reliées l'une à l'autre par un axe transversal d'articulation qui autorise leur rotation relative, dans un plan perpendiculaire au pare-brise passant par le bras.

Il est connu de tels adaptateurs comprenant un ou des pions flexibles de verrouillage venant s'encliqueter sur le bras de sorte à bloquer l'adaptateur sur ce dernier. Cependant, il convient d'anticiper une défaillance, telle qu'un désengagement du ou des pions, qui risquerait d'entraîner une désolidarisation non désirée du bras et du balai.

Il a déjà été proposé pour traiter ce risque des adaptateurs ou des connecteurs configurés pour permettre, en cas de défaillance du pion de verrouillage de l'adaptateur, un blocage en position du dispositif de fixation dans une direction située dans un plan perpendiculaire à l'axe d'articulation. DE-A-102009029458 montre le préambule de la revendication 1. L'invention vise à améliorer la situation, en particulier en termes de fiabilité et/ou de manoeuvrabilité.

Elle propose à cet effet un adaptateur de raccordement d'un balai d'essuie-glace sur un bras d'entraînement d'un système d'essuyage, ledit adaptateur étant configuré pour être lié à un connecteur avec un degré de liberté en pivotement autour d'un axe d'articulation, ledit connecteur étant fixé au balai, ledit adaptateur comprenant des moyens de maintien en une position nominale de blocage sur le bras, ledit adaptateur étant configuré pour être bloqué, dans une direction, dite de retrait, située dans un plan perpendiculaire à l'axe d'articulation, en une position de sécurité, en cas de défaillance desdits moyens de maintien.

Selon l'invention, l'adaptateur est configuré pour être guidé par le bras en translation, selon ladite direction de retrait, de ladite position nominale vers ladite position de sécurité et/ou pour présenter une direction de dégagement volontaire du bras à partir d'une position située entre les deux positions nominale et de sécurité.

Par « guidé » on entend que le seul degré de liberté entre le bras et l'adaptateur est la translation selon ladite direction de retrait. Grâce à ce guidage, on évite un arrachage accidentel du balai une fois que l'adaptateur a quitté sa position nominale.

Par ailleurs, en définissant une direction de dégagement du bras, on favorise la manipulation des différents organes du système d'essuyage lors des opérations de démontage volontaire.

L'invention trouvera son application, notamment, comme adaptateur pour balais à vertèbres de cintrage ou « flat blade ».

Ledit adaptateur comprend, par exemple, une butée, dite de sécurité, pour la position de sécurité. Avantageusement, cette butée est formée par une unique surface de butée.

Selon un premier aspect de l'invention, ledit adaptateur est configuré pour que, lors du passage de la position nominale à la position de sécurité, un bras comprenant des moyens de guidage en translation du bras sur l'adaptateur selon ladite direction de retrait, viennent en contact contre la butée de sécurité.

On donne ainsi aux moyens de guidage en translation du bras une double fonction, à savoir, une première fonction de guidage en translation, après défaillance des moyens de maintien, et une seconde fonction de butée en position de sécurité par contact avec la butée prévue sur l'adaptateur.

On évite de la sorte les découpes spécifiques, prévues sur les bras de l'état de l'art, qui rendent plus complexe la fabrication des bras. En effet de telles découpes nécessitent une fabrication du bras avec un degré de précision supérieur au degré de précision standard sinon utilisé pour cette pièce.

Selon un second aspect de l'invention, qui pourra être combiné au premier, l'adaptateur comprend des ailes latérales au niveau desquelles ledit connecteur est articulé, ledit adaptateur définissant entre lesdites ailes latérales un logement pour une partie du connecteur accueillant ledit axe d'articulation, au moins l'une desdites ailes latérales comprenant une paroi extérieure configurée pour guider le bras en translation, selon une direction située dans le plan perpendiculaire à l'axe d'articulation, et une paroi arrière située latéralement en retrait de ladite paroi extérieure, ladite butée de sécurité s'étendant latéralement vers l'extérieur depuis ladite paroi arrière.

Par « latéralement » on entend selon la direction dudit axe d'articulation. Par « latéralement en retrait », on entend vers l'intérieur de l'adaptateur c'est-à-dire vers le logement pour le connecteur.

Une telle solution permet de disposer d'un blocage en position de sécurité tout en favorisant le guidage de l'adaptateur dans le bras, notamment lors du montage. En effet, contrairement à l'état de l'art, il n'est plus nécessaire de réduire la longueur du bras consacré au guidage ou de devoir dépendre du connecteur et en particulier de sa taille pour réaliser cette fonction.

On constate d'ailleurs que ce second aspect de l'invention trouve son intérêt sans que l'adaptateur présente nécessairement les caractéristiques de guidage, en cas de défaillance des moyens de maintien, ou d'orientation selon une direction de désengagement, évoquées plus haut.

Autrement dit l'invention concerne aussi un adaptateur de raccordement d'un balai d'essuie-glace sur un bras d'entraînement d'un système d'essuie-glaces, ledit adaptateur étant configuré pour être lié à un connecteur avec un degré de liberté en pivotement autour d'un axe d'articulation, ledit connecteur étant fixé sur le balai, ledit adaptateur comprenant des moyens de maintien en une position nominale de blocage sur le bras, ledit adaptateur étant configuré pour être bloqué, dans une direction, dite de retrait, située dans un plan perpendiculaire à l'axe d'articulation, en une position de sécurité, en cas de défaillance desdits moyens de maintien, l'adaptateur comprenant des ailes latérales au niveau desquelles ledit connecteur est articulé, ledit adaptateur définissant entre lesdites ailes latérales un logement pour une partie du connecteur accueillant ledit axe d'articulation, au moins l'une desdites ailes latérales comprenant une paroi extérieure configurée pour guider le bras en translation, selon une direction située dans le plan perpendiculaire à l'axe d'articulation, lors du montage de l'adaptateur sur le bras, et une paroi arrière située latéralement en retrait de ladite paroi extérieure, une butée de sécurité pour la position de sécurité s'étendant latéralement vers l'extérieur depuis ladite paroi arrière.

L'invention concerne également un adaptateur de raccordement d'un balai d'essuie-glace sur un bras d'entraînement d'un système d'essuie-glaces, ledit adaptateur étant configuré pour être lié à un connecteur avec un degré de liberté en pivotement autour d'un axe d'articulation, ledit adaptateur comprenant des moyens de maintien en une position nominale de blocage sur le bras, ledit adaptateur étant configuré pour être bloqué, dans une direction dite de retrait, située dans un plan perpendiculaire à l'axe d'articulation, en une position de sécurité en cas de défaillance desdits moyens de maintien, l'adaptateur comprenant au moins une aile latérale délimitée par au moins une paroi extérieure configurée pour guider le bras en translation, selon la direction de retrait, et une paroi arrière située en retrait de ladite paroi extérieure, une butée de sécurité pour la position de sécurité s'étendant latéralement vers l'extérieur depuis ladite paroi arrière, la butée de sécurité étant située à une distance de l'extrémité de la rampe selon la direction de retrait.

Selon différents modes de mise en oeuvre de ces aspects de l'invention, qui pourront être pris ensemble ou séparément :
- le bras comprend une chape de support destinée à être raccordée audit adaptateur,
- le connecteur est formé par deux brides symétriques liées l'une à l'autre, venant en prise sur le balai au niveau des vertèbres dudit balai,
- le connecteur et l'adaptateur sont configurés pour recevoir un même ergot transversal, ledit ergot transversal constituant ledit axe d'articulation,
- l'adaptateur possède, sur les parois extérieures de ses ailes latérales, des surfaces faisant saillies constituant les seules surfaces de contact entre l'adaptateur et les faces latérales de la chape. De préférence, celui-ci possède deux surfaces faisant saillies par face latérale, disposées respectivement en vis-à-vis par rapport aux surfaces faisant saillies de la face latérale opposée de la chape,
- ledit axe d'articulation est formé par un ergot transversal, ledit ergot transversal étant configuré de manière à s'étendre sensiblement jusqu'aux parois extérieures des ailes latérales de l'adaptateur,
- l'adaptateur est configuré pour que les moyens de guidage en translation, selon ladite direction de retrait, servent en outre de butée de positionnement pour la position nominale,
- ledit bras présente des moyens de guidage en translation du bras sur l'adaptateur,
- lesdits moyens de guidage en translation du bras sur ledit adaptateur étant réalisés sous la forme de glissières prévues au niveau de faces latérales du bras, ladite butée de sécurité est positionnée pour que lesdites glissières viennent en contact de ladite butée de sécurité en cas de défaillance desdits moyens de maintien,
- ledit adaptateur présente des bords inférieurs destinés à coopérer avec lesdites glissières, lesdits bords inférieurs étant situés sensiblement au niveau des parois extérieures formant les ailes latérales de l'adaptateur,
- lesdites glissières couvrent sensiblement toute la surface desdits bords inférieurs, de préférence uniquement la surface desdits bords inférieurs,
- l'adaptateur possède une butée de calage, contre laquelle vient en contact une extrémité longitudinale avant de l'une desdites glissières en position nominale,
- les extrémités longitudinales avant et arrière desdites glissières possèdent une forme sensiblement complémentaire respectivement à ladite butée de calage et à ladite butée de sécurité,
- lesdites butées de sécurité, de calage et glissières présentent une hauteur sensiblement égale,
- lesdites butées de sécurité, de calage et glissières sont situés sensiblement dans un même plan,
- le logement de l'adaptateur présente une hauteur supérieure à la partie du connecteur qu'il reçoit, la hauteur du connecteur diminuant progressivement de son centre vers ses extrémités longitudinales, l'adaptateur étant apte, en position nominale, à pivoter autour de l'axe d'articulation sans entrer en contact avec la face supérieure du connecteur,
- l'amplitude de pivotement du connecteur en position nominale est limitée uniquement par la venue en butée de l'adaptateur ou des glissières sur la paroi externe des rainures du connecteur,
- l'adaptateur comprend une rampe de désengagement du bras reliant ladite paroi extérieure et ladite paroi arrière,
- ladite rampe de désengagement présente une forme sensiblement rectiligne,
- ladite rampe ne chevauche pas ladite butée de sécurité dans ladite direction de retrait,
- ladite rampe de désengagement s'étend d'un point bas situé au niveau de l'un desdits bords inférieurs de l'adaptateur destinés à coopérer avec lesdites glissières jusqu'à un point haut situé à proximité du centre de ladite paroi arrière,
- la distance séparant ladite rampe de ladite butée de sécurité est comprise entre 0,5 et 3 cm, de préférence entre 0,6 et 2 cm, plus préférablement entre 0,6 et 1,5 cm, et est encore plus préférablement d'environ 1 cm. Par exemple de 0,9 cm,
- l'adaptateur comprend au moins un bord inférieur situé sensiblement au niveau de ladite paroi extérieure formant les ailes latérales de l'adaptateur, ladite rampe de désengagement s'étendant à partir d'un point bas situé au niveau dudit bord inférieur de l'adaptateur, la distance séparant ledit point bas de ladite butée de sécurité étant comprise entre 1,5 et 4 cm, de préférence entre 2 et 3 cm,
- la butée de sécurité est située à une extrémité arrière de ladite paroi arrière,
- l'adaptateur comprend des faces avant et arrière opposées comprenant chacune une fente de passage du balai, en particulier d'un déflecteur du balai,
- l'adaptateur comprend une deuxième butée de sécurité, la fente portée par la face arrière dudit adaptateur s'étendant dans une direction concourante à un plan qui comprend les deux butées de sécurité de l'adaptateur et qui est sensiblement perpendiculaire à ladite direction de retrait,
- l'adaptateur est configuré de manière à permettre l'introduction d'une extrémité distale de la chape du bras sur l'adaptateur au niveau de ladite paroi arrière, avant que la chape ne vienne au contact de la paroi extérieure et de la rampe pour rejoindre sa position de blocage nominale,
- lesdits moyens de maintien sont constitués par un pion flexible prévu sur une face supérieure dudit adaptateur, ledit pion flexible comprenant une face supérieure et une face avant, lesdites faces supérieure et avant dudit pion flexible étant reliées par une arête vive,
- ledit pion flexible comprend une face arrière opposée à sa dite face avant et reliée à sa face supérieure par un moyen apte à faciliter l'introduction d'une chape du bras,
- l'adaptateur est apte à coopérer avec un bras comprenant des moyens de guidage en translation sur l'adaptateur selon ladite direction de retrait, lesdits moyens de guidage venant en contact contre la butée de sécurité, lesdits moyens de guidage en translation, selon ladite direction de retrait, servant en outre pour le montage du bras (3) sur l'adaptateur et/ou participent au maintien du bras sur l'adaptateur lors du passage de la position nominale à la position de sécurité.
- lesdits moyens de guidage en translation, selon ladite direction de retrait, servant en outre pour le montage du bras sur l'adaptateur et/ou participent au maintien du bras sur l'adaptateur en position nominale.

L'invention concerne aussi un connecteur de balais d'essuie-glace destiné à être monté en pivotement sur un adaptateur tel que décrit plus haut.

L'invention concerne également un dispositif de fixation comprenant un tel connecteur et un tel adaptateur.

L'invention concerne encore un bras de système d'essuyage destiné à être raccordé à un tel adaptateur ou à un tel système de fixation.

Ledit bras comprend, par exemple, une chape de support destinée à être raccordé audit adaptateur et/ou audit système de fixation.

Selon un mode de réalisation préféré, ladite chape comprenant des faces latérales et des glissières prévues au niveau desdites faces latérales, lesdites glissières étant formées respectivement par un unique pli desdites faces latérales du bras, chaque glissière s'étendant vers l'intérieur du bras de préférence selon un angle sensiblement égal à 90° par rapport auxdites faces latérales.

Selon un autre mode de réalisation préféré, lesdites glissières sont aptes à maintenir ledit bras sur l'adaptateur dans la direction verticale, lesdites glissières couvrant uniquement la surface desdits bords inférieurs situés sensiblement au niveau des parois extérieures formant les ailes latérales de l'adaptateur.

Selon un encore autre mode de réalisation, lesdites glissières ont une longueur inférieure ou égale à la distance séparant le point bas de la rampe à la butée de sécurité, de préférence strictement inférieure, par exemple de 5 à 20%.

L'invention concerne aussi un système d'essuyage comprenant un tel bras et un tel dispositif de fixation.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue en perspective d'un exemple de réalisation d'un système d'essuyage selon l'invention, le bras étant seulement illustré au niveau de sa chape,
- la figure 2 est une vue détaillée de la figure 1, montrant seulement le balai et le connecteur,
- la figure 3 reprend la figure 2 en montrant en outre l'adaptateur,
- la figure 4 reprend la figure 3 en montrant en outre la chape du bras,
- la figure 5 est une vue en perspective, de dessous, de la chape des figures 1 et 4,
- la figure 6 est une vue en perspective, de dessus, de l'adaptateur des figures 1, 3 et 4,
- la figure 7 est une vue en coupe transversale du dispositif de fixation et de la chape de la figure précédente,
- les figures 8a à 8d illustrent en perspective différentes positions du dispositif de fixation et de la chape des figures précédentes.

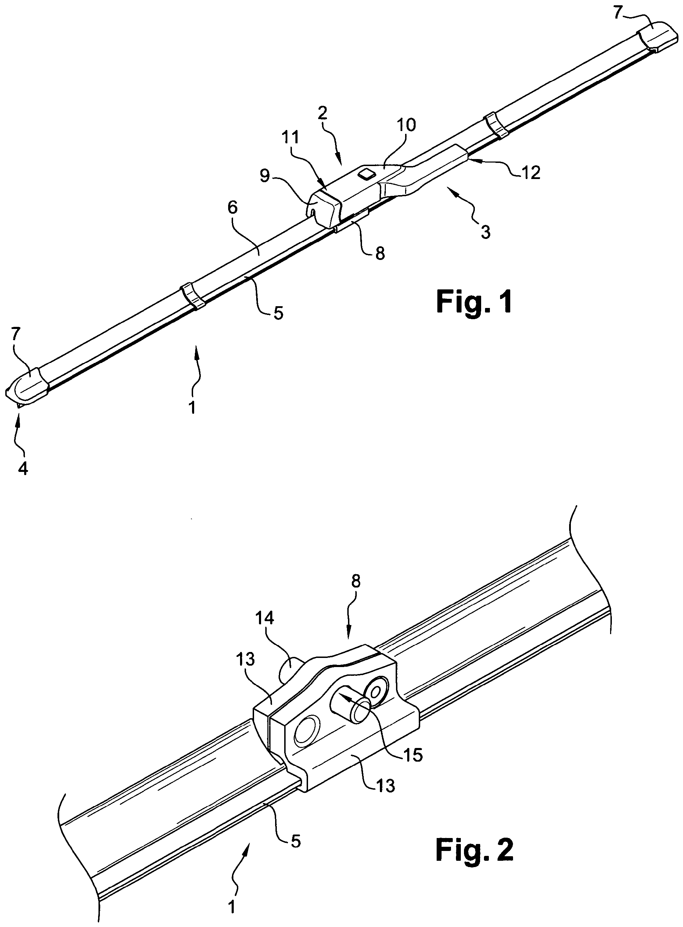

En se référant à la figure 1, l'invention concerne un système d'essuyage ou essuie-glace comprenant un balai 1, un dispositif de fixation 2 et un bras 3 raccordé au balai 1 par le dispositif de fixation 2.

Le balai 1 comprend ici un corps muni d'une lame racleuse 4 et d'une ou plusieurs vertèbres 5 donnant au balai un cintrage lui permettant d'être appliqué correctement sur le pare-brise. Il comprend également un déflecteur 6 et/ou des embouts 7 reliant l'ensemble.

Le dispositif de fixation 2 comprend un connecteur 8 et un adaptateur 9.

Le bras 3 comporte ici une chape de support 10, destinée à être raccordé audit dispositif de fixation 2, en particulier à l'adaptateur 9, par une extrémité distale 11. Ladite chape 10 présente une extrémité proximale 12 fixée à une tige, non illustrée, du bras 3, par exemple par sertissage.

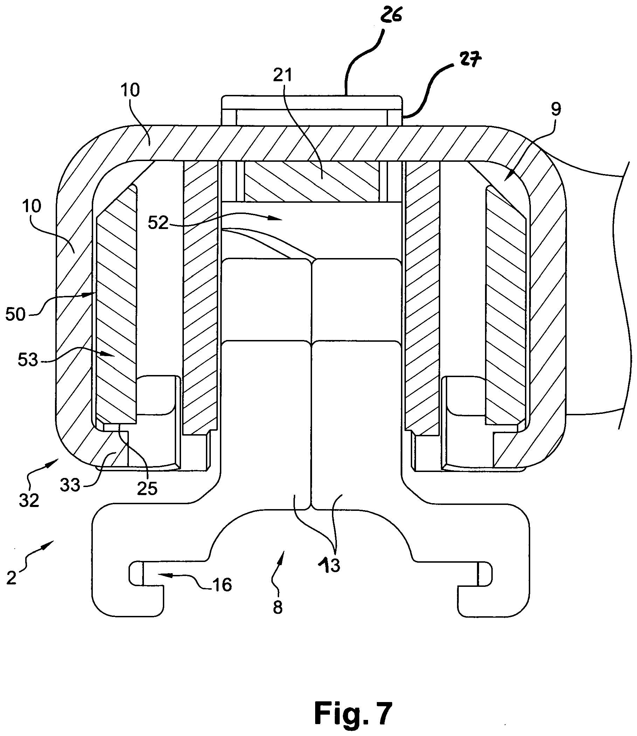

Comme illustré aux figures 2 et 7, le connecteur 8 est fixé au balai. On entend par là qu'il est lié au balai sans degré de liberté.

Il présente, par exemple, deux brides 13 symétriques et liées l'une à l'autre, prenant en sandwich le balai 1, ici au niveau des vertèbres 5 dudit balai 1. Lesdites brides 13 comprennent chacune pour cela une rainure 16 de logement desdites vertèbres, situées dans une partie inférieure du connecteur 8.

Ledit connecteur 8 est destiné à être monté en pivotement sur l'adaptateur. Il accueille en ce sens un axe d'articulation 14, ici traversant les brides 13 au niveau d'un orifice 15 situé dans une partie supérieure du connecteur 8. Ledit axe d'articulation 14 est destiné à être orienté dans direction une orthogonale au balai 1, dans plan tangent au pare brise.

Comme illustré en figure 2, le connecteur 8 présente une face supérieure non plane dont les extrémités longitudinales s'étendent de façon linéaire et montante jusqu'à proximité du centre du connecteur, où ladite face supérieure suit alors la forme courbe de l'ergot transversal constituant l'axe d'articulation 14. La hauteur du connecteur 8 diminuant progressivement de son centre vers ses extrémités longitudinales, on s'assure ainsi que, lors de la rotation de l'adaptateur 9 autour de l'axe d'articulation 14 en position nominale, la face supérieure du connecteur 8 ne vienne jamais en butée contre l'adaptateur 9. Ainsi, en position nominale, l'amplitude de pivotement ne sera limitée que par la venue en butée de l'adaptateur 9 ou des glissières 33 sur la paroi externe des rainures 16 du connecteur 8.

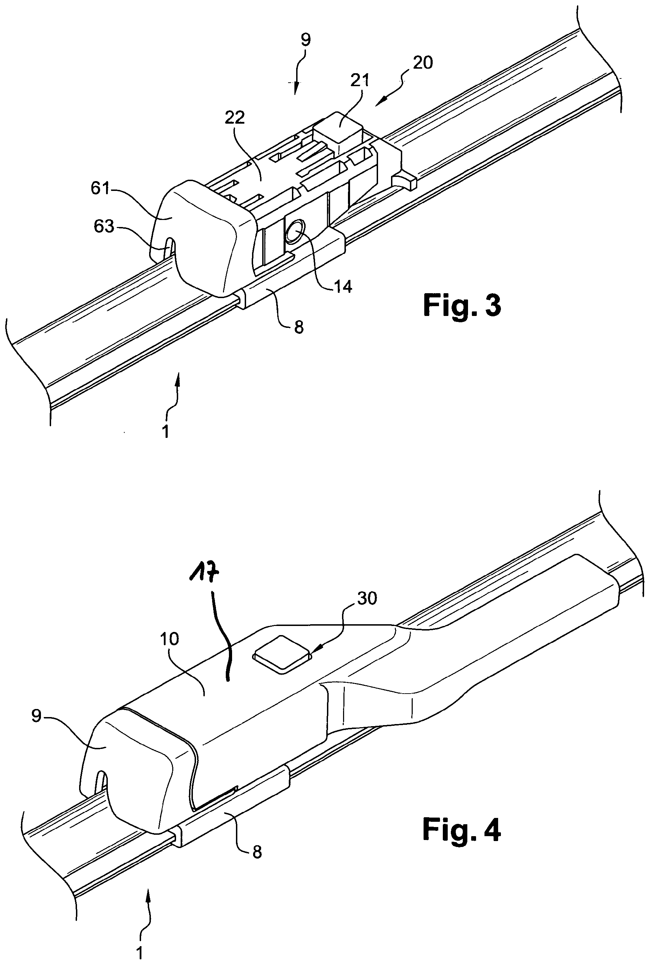

Comme illustré aux figures 3, 6 et 7, l'adaptateur 9 est configuré pour être lié au connecteur 8 avec un degré de liberté en pivotement autour de l'axe d'articulation 14.

Comme illustré aux figures 4, 5 et 7, la chape 10 du bras comprend ici sur sa face supérieure 17 une lumière 30 de forme complémentaire à celle du pion 21. Lors du montage de l'adaptateur 9 dans le bras 3, ledit pion 21 vient se loger dans la lumière 30 permettant de la sorte de verrouiller le balai 1 sur le bras 3, dans ladite position nominale de maintien.

L'adaptateur 9 a ici vocation à s'insérer dans la chape 10 par un mouvement de translation situé dans un plan perpendiculaire à l'axe d'articulation 14, pour venir dans ladite position nominale de maintien. La chape 10 est munie pour cela d'une ouverture distale 31 et l'adaptateur 9 est configuré pour être introduit dans ladite ouverture distale 31. Le pion 21 est alors en position escamoté jusqu'à atteindre la lumière 30 dans laquelle il s'engage alors, de façon réversible.

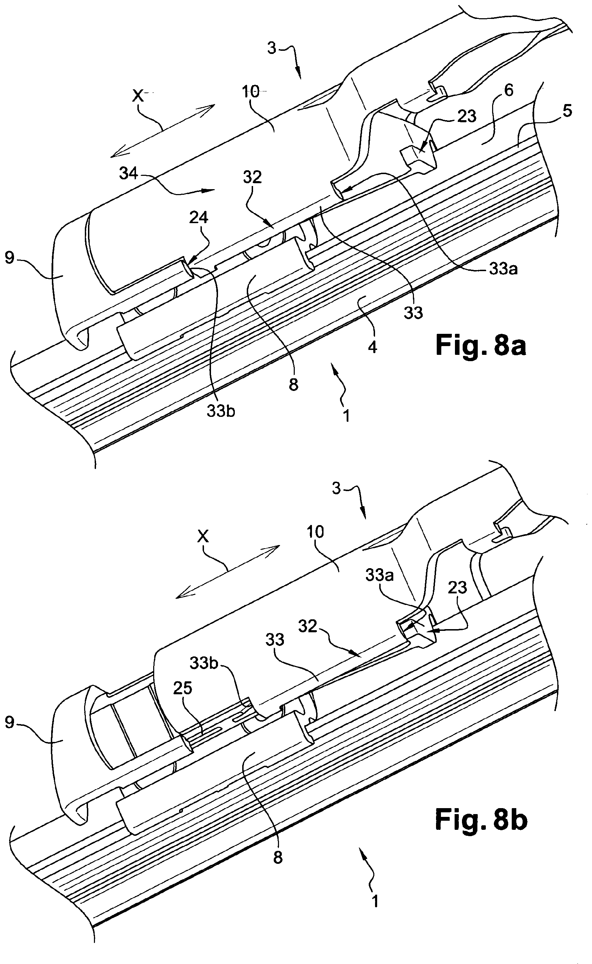

Comme illustré aux figures 8a et 8b, ledit adaptateur 9 est configuré pour être bloqué, dans une direction, dite de retrait, située dans un plan perpendiculaire à l'axe d'articulation, en une position de sécurité, en cas de défaillance desdits moyens de maintien.

Selon l'invention, ledit adaptateur 9 est en outre configuré pour être guidé par le bras 3 en translation, selon ladite direction de retrait, repérée X, de ladite position nominale, illustré à la figure 8a, vers ladite position de sécurité, illustré à la figure 8b.

Un tel guidage permet de renforcer la fiabilité en évitant une désolidarisation du bras 3 et du balai 1 lorsque, en cas de défaillance des moyens 20 de maintien, ils se retrouvent libres en translation entre la position nominale et la position de sécurité. De façon avantageuse, le guidage est effectif d'une position à l'autre. Il pourra cependant s'interrompre, notamment à proximité de la position de sécurité.

De son côté, ledit bras 3 présente, par exemple, des moyens 32 de guidage en translation du bras 3 sur l'adaptateur 9, mieux visibles aux figures 4, 5 et 7.

Ledit adaptateur 9 comprend, par exemple, une butée 23, dite de sécurité, pour la position de sécurité.

Si l'on revient à la figure 8b, on constate que ledit adaptateur 9 est ici configuré pour que, lors du passage de la position nominale à la position de sécurité, lesdits moyens 32 de guidage en translation du bras sur l'adaptateur viennent en contact contre la butée 23 de sécurité, selon ladite direction de retrait X. Lesdits moyens 32 de guidage présentent de la sorte une double fonction de guidage et de butée.

Ledit adaptateur 9 pourra en outre être configuré pour que lesdits moyens 32 de guidage en translation selon la direction X puissent aussi servir au montage du bras 3 sur l'adaptateur 9 et/ou participer au maintien dudit bras 3 sur ledit adaptateur 9 en position nominale. Lesdits moyens de guidage 32 en translation sont ainsi enrichis d'une troisième fonction.

De façon encore supplémentaire, ledit adaptateur 9 pourra de plus être configuré pour que les moyens 32 de guidage en translation, selon ladite direction X, servent de butée de positionnement pour la position nominale. Ils déterminent de la sorte, tel que cela est le cas dans l'exemple illustré, la position dans laquelle le pion 21 s'engage dans la lumière 30.

Pour cela, l'adaptateur présente, par exemple, une butée 24, dite de calage.

Lesdits moyens 32 de guidage en translation du bras 3 sur ledit adaptateur 9 comprennent, notamment, des glissières 33, tournées l'une vers l'autre. Lesdites glissières 33 sont constituées ici de bords pliés des faces latérales 34 desdits bras s'étendant depuis une face 35 supérieure de celui-ci, portant ladite lumière 30. Lesdites glissières 33 s'étendent selon ladite direction longitudinale du bras, c'est-à-dire, lorsque le bras 3 est monté sur le dispositif de fixation 2, selon ladite direction X.

Lesdites butées de sécurité 23 sont alors positionnées pour que lesdites glissières 33 viennent en contact desdites butées de sécurité 23 en cas de défaillance desdits moyens de maintien, en particulier avec une extrémité longitudinale arrière 33a desdites glissières 33.

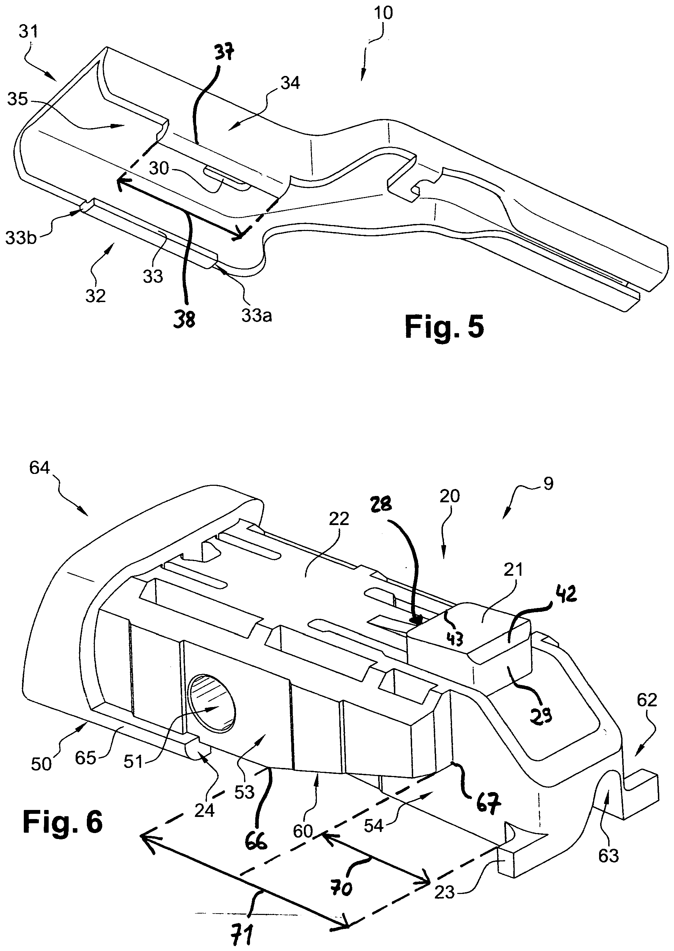

Ici, ledit adaptateur 9 présente des bords inférieurs 25 destinés à coopérer avec lesdites glissières 33, en particulier pour assurer le guidage en translation à la fois en cas de défaillance des moyens de maintien 20 et lors du montage. Comme illustré aux figures 5 et 7, on constate que les glissières 33 ne résultent que d'un seul pli 37 des faces latérales 34 de la chape 10, les glissières 33 étant orientées vers l'intérieur du bras selon un angle sensiblement égal à 90° par rapport auxdites faces latérales 34. La fabrication du bras 3 est ainsi rendue particulièrement facile. On constate en outre que lesdites glissières 33 couvrent sensiblement toute la surface des bords inférieurs 25, sans s'étendre au-delà. On assure ainsi l'ensemble des fonctions remplies par ces glissières tout en utilisant un minium de matière pour leur réalisation. Avantageusement, la longueur 38 des glissières est ici inférieure à la distance séparant ledit point bas 66 de la rampe 60 à ladite butée de sécurité 23.

La butée de calage 24 de l'adaptateur 9 pourra être positionnée pour venir en contact une extrémité longitudinale avant 33b desdites glissières 33 lors du montage.

Si l'on se reporte à nouveau aux figures 3, 6 et 7, on constate que ledit adaptateur comprend ici des ailes latérales 50 au niveau desquelles ledit connecteur 8 est articulé, notamment par l'intermédiaire d'un orifice 51. Ledit adaptateur 9 définit entre lesdites ailes latérales 50 un logement 52 pour une partie du connecteur 8 accueillant ledit axe d'articulation 14. Au moins l'une, ici les deux, desdites ailes latérales 50 comprend une paroi extérieure 53 configurée pour guider le bras 3 en translation selon la direction X, que ce soit lors du montage de l'adaptateur sur le bras et/ou en cas de défaillance des moyens 20 de maintien. Elle comprend en outre une paroi arrière 54, située latéralement en retrait de ladite paroi extérieure 53, ladite butée de sécurité 23 s'étendant latéralement vers l'extérieur depuis ladite paroi arrière 54.

Comme illustré en figure 6, la paroi 53 comprend avantageusement des surfaces faisant saillies constituant les seules surfaces de contact entre l'adaptateur 9 et les faces latérales 34 de la chape 10. L'adaptateur 9 comprend avantageusement deux surfaces faisant saillies par face latérale 34, celles-ci étant disposées respectivement en vis-à-vis par rapport à celles de la face latérale 34 opposée. L'ergot transversal formant l'axe d'articulation 14 étant configuré de manière à ne pas s'étendre vers l'extérieur des ailes latérales de l'adaptateur, on évite grâce à ces surfaces faisant saillies les frottements entre la chape 10 et ledit ergot. On améliore ainsi la rotation de l'adaptateur 9 autour de l'axe 14, et donc la qualité d'essuyage.

Les parois arrière 54 sont, par exemple, parallèles aux parois extérieures et/ou s'étendent vers l'arrière, c'est-à-dire, en direction de l'extrémité proximale de la chape 10, dans un plan perpendiculaire à l'axe d'articulation 14. Elles sont symétriques l'une par rapport à l'autre. Les bords inférieurs 25 coopérants avec les glissières 33 sont au niveau desdites parois extérieures 53.

Ici, lesdites ailes latérales 50 sont liées à la face supérieure 22. L'adaptateur 9 comprend deux ailes 50, symétriques. Il présente une section transversale sensiblement en forme de U.

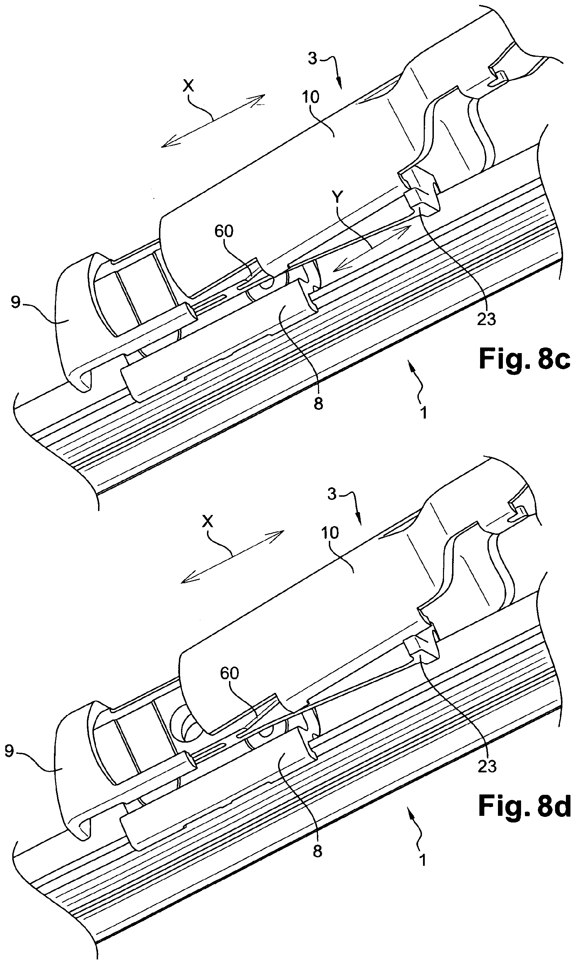

Comme illustré aux figures 8c et 8d, l'adaptateur 9 est aussi configuré pour présenter une direction, repérée Y, de dégagement volontaire du bras 3 à partir d'une position située entre les deux positions nominale et de sécurité. On améliore de la sorte la manoeuvrabilité de l'ensemble.

A la figure 8c, on voit que le bras 3 a été légèrement pivoté vers le haut par rapport à l'adaptateur 9 pour désengager ledit bras 3 de la butée de sécurité 23.

A la figure 8d, on prolonge le mouvement du bras 3 par rapport à l'adaptateur 9. Le désengagement étant ici plus avancé, on ne suit plus obligatoirement ici la direction Y de désengagement volontaire. Elle est ici décalée angulairement de quelques degrés de ladite direction X.

Pour assurer un tel fonctionnement, ledit adaptateur comprend, par exemple, une rampe 60 de désengagement du bras 3, reliant ici ladite paroi extérieure 53 et ladite paroi arrière 54. Cette rampe 60 s'étend d'un point bas 66 appartenant à ladite paroi extérieure 53 à une extrémité 67 située sur ladite paroi arrière 54.

Ladite butée de sécurité 23 est située, par exemple, à une extrémité arrière de ladite paroi arrière 54, notamment dans un coin inférieur de celle-ci. On entend par là un coin opposé à la face supérieure 22 dudit adaptateur 9.

Comme illustré en figure 6, la rampe 60 présente une forme sensiblement rectiligne, facilitant le montage. En outre, celle-ci ne surplombe pas la butée de sécurité 23, dans la mesure où elle ne se prolonge pas jusqu'à ladite extrémité arrière de ladite paroi arrière 54. La butée de sécurité 23 est donc située à une distance 70 de l'extrémité 67 de la rampe selon la direction de retrait.

On permet ainsi l'introduction de l'extrémité distale 11 de la chape 10 sur l'adaptateur 9 au niveau de la paroi arrière 54, avant que la chape 10 ne vienne au contact de la paroi extérieure 53 et de la rampe 60 pour rejoindre sa position de blocage nominale.

Comme illustré en figures 8a à 8d, on remarque qu'ici la distance 71 séparant le point plus bas 66 de la rampe 60 à la butée 23 est légèrement supérieure à la longueur 38 de la glissière 33. Le bras 3 peut ainsi être facilement introduit sur l'adaptateur 9 sans que la butée de sécurité 23 ne vienne toucher la chape 10 du bras 3, et donc gêner cette introduction. L'introduction du bras 3 sur l'adaptateur 9 est ainsi grandement facilitée.

Dans l'exemple illustré, la chape 10 présente une forme sensiblement parallélépipédique creuse dont les faces avant, arrière et inférieure sont ouvertes pour laisser passer l'adaptateur 9 et le connecteur 8 qui lui est attaché. La face inférieure comporte les glissières 33 formant moyens de support pour l'adaptateur 9, et sur lesquelles viennent prendre appui les bords inférieurs 25 dudit adaptateur 9. L'adaptateur 9 présente sensiblement lui aussi la forme d'un parallélépipède avec, sur sa face supérieure 22, le pion escamotable 21. La largeur de l'adaptateur 9 est légèrement inférieure à l'écartement entre les faces latérales 34 de la chape 10 pour que l'adaptateur 9 puisse s'y insérer, mais supérieure à l'écart existant entre les deux glissières 33 de façon que celles-ci puissent le porter. L'adaptateur 9 présente au niveau de faces avant 61 et arrière 62 opposées des fentes 63 de passage du balai 3, en particulier de son déflecteur 6. Les butées de sécurité 23 sont au niveau de ladite face arrière 62.

Les faces latérales 34 de la chape 10 sont identiques l'une à l'autre, au moins dans leur partie d'extrémité avant en contact avec l'adaptateur 9. L'adaptateur 9 présente une tête 64, dont les contours sont destinés à se trouver dans la prolongation de la chape 10, en position nominale, en faisant butée en translation selon ladite direction X pour la face supérieure 35 et les faces latérales 34 de ladite chape 10.

Ladite tête 64 est ici prolongée vers l'arrière par un plat 65 se trouvant le long d'une arrête inférieure des parois extérieures 53 et dont l'extrémité opposée à la tête définit la butée de calage 24.

Avantageusement, les butées de sécurité 23, de calage 24 et les glissières 33 présentent une hauteur sensiblement égale. En outre, les extrémités longitudinales avant 33b des glissières 33 possèdent une forme sensiblement complémentaire aux butées de calage 24, de même que les extrémités longitudinales arrières 33a des glissières 33 possèdent une forme sensiblement complémentaire aux butées de sécurité 23. On optime ainsi la coopération entre les extrémités longitudinales avant 33b et arrière 33a des glissières 33 et les butées de sécurité 23 et de calage 24 correspondantes, tout en obtenant un aspect esthétique satisfaisant du balai d'essuie-glace.

On pourra noter que le connecteur 8 présente une dimension d'extension longitudinale, c'est-à-dire, selon la direction d'extension du balai 1, inférieure à celle de l'adaptateur 9 de sorte qu'il est dissimulé dans ledit logement 52.

De plus et comme illustré en figure 7, le logement 52 présente une hauteur supérieure à la partie du connecteur 8 qu'il reçoit, de sorte qu'aucune partie de la face supérieure de ce dernier ne vienne en butée contre sa face supérieure en position nominale. Le connecteur 8 n'est donc au contact de l'adaptateur 9 que par les faces latérales de ses brides 13.

Il est à noter que des variantes de réalisation sont bien sûr possibles. Notamment la chape de support 10, peut être réalisée dans la même matière que le reste du bras, en continuité avec lui.

## Revendications

1. Adaptateur (9) de raccordement d'un balai (1) d'essuie-glace sur un bras (3) d'entraînement d'un système d'essuyage, ledit adaptateur (9) étant configuré pour être lié à un connecteur (8) avec un degré de liberté en pivotement autour d'un axe d'articulation (14), ledit adaptateur (9) comprenant des moyens (20) de maintien en une position nominale de blocage sur le bras (3), ledit adaptateur (9) étant configuré pour être bloqué, dans une direction dite de retrait, située dans un plan perpendiculaire à l'axe d'articulation (14), en une position de sécurité en cas de défaillance desdits moyens (20) de maintien, ledit adaptateur (9) comprenant au moins une aile latérale (50) délimitée par au moins une paroi extérieure (53) configurée pour guider le bras (3) en translation, selon ladite direction de retrait, et une paroi arrière (54) située en retrait de ladite paroi extérieure (53), une butée de sécurité (23) pour ladite position de sécurité s'étendant latéralement vers l'extérieur depuis ladite paroi arrière (54), ledit adaptateur (9) comprenant une rampe (60) de désengagement du bras (3) reliant ladite paroi extérieure (53) et ladite paroi arrière (54), **caractérisé en ce que** la butée de sécurité (23) est située à une distance (70) de l'extrémité de la rampe selon la direction de retrait.

2. Adaptateur (9) selon la revendication 1, dans lequel la distance (70) séparant ladite rampe (60) de ladite butée de sécurité (23) est comprise entre 0,5 et 3 cm, de préférence entre 0,6 et 2 cm, plus préférablement entre 0,6 et 1,5 cm.

3. Adaptateur (9) selon l'une quelconque des revendications précédentes, comprenant au moins un bord inférieur (25) situé sensiblement au niveau de ladite paroi extérieure (53), ladite rampe (60) de désengagement s'étendant à partir d'un point bas (66) situé au niveau dudit bord inférieur (25) de l'adaptateur (9), la distance (71) séparant ledit point bas (66) de ladite butée de sécurité (23) étant comprise entre 1,5 et 4 cm, de préférence entre 2 et 3 cm.

4. Adaptateur (9) selon l'une quelconque des revendications précédentes, dans lequel la butée de sécurité (23) est située à une extrémité arrière de ladite paroi arrière (54).

5. Adaptateur (9) selon l'une quelconque des revendications précédentes, comprenant des faces avant (61) et arrière (62) opposées comprenant chacune une fente (63) de passage du balai (3), en particulier d'un déflecteur (6) du balai (3).

6. Adaptateur (9) selon la revendication précédente, comprenant une deuxième butée de sécurité (23), la fente (63) portée par la face arrière (62) dudit adaptateur (9) s'étendant dans une direction concourante à un plan qui comprend les deux butées de sécurité (23) de l'adaptateur (9) et qui est sensiblement perpendiculaire à ladite direction de retrait.

7. Adaptateur (9) selon l'une quelconque des revendications précédentes, dans lequel lesdits moyens (20) de maintien sont constitués par un pion flexible (21) prévu sur une face supérieure (22) dudit adaptateur (9), ledit pion flexible (21) comprenant une face supérieure (26) et une face avant (28), lesdites faces supérieure (26) et avant (28) dudit pion flexible (21) étant reliées par une arête vive (43).

8. Adaptateur (9) selon la revendication précédente, ledit pion flexible (21) comprenant une face arrière (29) opposée à sa dite face avant (28) et reliée à sa face supérieure (26) par un moyen (42) apte à faciliter l'introduction d'une chape (10) du bras (3).

9. Adaptateur (9) selon l'une quelconque des revendications précédentes, apte à coopérer avec un bras comprenant des moyens (32) de guidage en translation sur l'adaptateur (9) selon ladite direction de retrait, lesdits moyens (32) de guidage venant en contact contre la butée de sécurité (23), lesdits moyens (32) de guidage en translation, selon ladite direction de retrait, servant en outre pour le montage du bras (3) sur l'adaptateur (9) et/ou participent au maintien du bras (3) sur l'adaptateur (9) lors du passage de la position nominale à la position de sécurité.

10. Dispositif de fixation (2) comprenant un connecteur (8) et un adaptateur (9) selon l'une quelconque des revendications 1 à 9, articulé sur ledit connecteur (8).

11. Système d'essuyage comprenant un bras (3) de système d'essuyage destiné à être raccordé à un dispositif de fixation (2) selon la revendication 10, ledit système d'essuyage comprenant ledit dispositif de fixation (2).

12. Système d'essuyage selon la revendication précédente, dans lequel ledit bras comprend une chape de support destinée à être raccordée audit dispositif de fixation (2), ladite chape comprenant des faces latérales (34) et des glissières (33) prévues au niveau desdites faces latérales (34), lesdites glissières (33) étant formées respectivement par un unique pli (37) desdites faces latérales (34) du bras (3), chaque glissière (33) s'étendant vers l'intérieur du bras (3) de préférence selon un angle sensiblement égal à 90° par rapport auxdites faces latérales (34).

13. Système d'essuyage selon la revendication précédente, dans lequel l'adaptateur (9) comprend deux bords inférieurs (25), et dans lequel lesdites glissières (33) du bras (3) sont aptes à maintenir ledit bras (3) sur l'adaptateur (9) dans la direction verticale, lesdites glissières (33) couvrant uniquement la surface desdits bords inférieurs (25).

14. Système d'essuyage selon la revendication 12 ou 13, dans lequel lesdites glissières (33) ont une longueur (38) inférieure ou égale à la distance (71) séparant ledit point bas (66) de ladite butée de sécurité (23), de préférence strictement inférieure.

## Patentansprüche

1. Adapter (9) für die Verbindung eines Scheibenwischerblatts (1) mit einem Antriebsarm (3) eines Wischsystems, wobei der Adapter (9) konfiguriert ist, mit einem Verbinder (8) mit einem Freiheitsgrad beim Schwenken um eine Gelenkachse (14) verbunden zu werden, wobei der Adapter (9) Einrichtungen (20) zum Halt in einer Nennblockierstellung auf dem Arm (3) enthält, wobei der Adapter (9) konfiguriert ist, in einer so genannten Rückziehrichtung, die sich in einer Ebene lotrecht zur Gelenkachse (14) befindet, im Fall eines Ausfalls der Halteeinrichtungen (20) in einer Sicherheitsstellung blockiert zu werden, wobei der Adapter (9) mindestens einen seitlichen Flügel (50) enthält, der von mindestens einer Außenwand (53), die konfiguriert ist, den Arm (3) in Translation gemäß der Rückziehrichtung zu führen, und einer Rückwand (54) begrenzt wird, die sich zurückgesetzt zur Außenwand (53) befindet, wobei ein Sicherheitsanschlag (23) für die Sicherheitsstellung sich von der Rückwand (54) seitlich nach außen erstreckt, wobei der Adapter (9) eine Rampe (60) zum Lösen des Arms (3) enthält, die die Außenwand (53) und die Rückwand (54) verbindet, **dadurch gekennzeichnet, dass** der Sicherheitsanschlag (23) sich in einem Abstand (70) zum Ende der Rampe gemäß der Rückziehrichtung befindet.

2. Adapter (9) nach Anspruch 1, wobei der die Rampe (60) vom Sicherheitsanschlag (23) trennende Abstand (70) zwischen 0,5 und 3 cm, vorzugsweise zwischen 0,6 und 2 cm, noch bevorzugter zwischen 0,6 und 1,5 cm liegt.

3. Adapter (9) nach einem der vorhergehenden Ansprüche, der mindestens einen unteren Rand (25) enthält, der sich im Wesentlichen im Bereich der Außenwand (53) befindet, wobei die Löserampe (60) sich ausgehend von einem unteren Punkt (66) erstreckt, der sich im Bereich des unteren Rands (25) des Adapters (9) befindet, wobei der den unteren Punkt (66) vom Sicherheitsanschlag (23) trennende Abstand (71) zwischen 1,5 und 4 cm, vorzugsweise zwischen 2 und 3 cm liegt.

4. Adapter (9) nach einem der vorhergehenden Ansprüche, wobei der Sicherheitsanschlag (23) sich an einem hinteren Ende der Rückwand (54) befindet.

5. Adapter (9) nach einem der vorhergehenden Ansprüche, der einander gegenüberliegende Vorder-(61) und Rückseiten (62) enthält, die je einen Durchgangsschlitz (63) für das Wischerblatt (3), insbesondere einen Spoiler (6) des Wischerblatts (3), enthalten.

6. Adapter (9) nach dem vorhergehenden Anspruch, der einen zweiten Sicherheitsanschlag (23) enthält, wobei der von der Rückseite (62) des Adapters (9) getragene Schlitz (63) sich in einer Richtung erstreckt, die mit einer Ebene zusammenfällt, die die zwei Sicherheitsanschläge (23) des Adapters (9) enthält und die im Wesentlichen lotrecht zur Rückziehrichtung ist.

7. Adapter (9) nach einem der vorhergehenden Ansprüche, wobei die Halteeinrichtungen (20) aus einem flexiblen Klötzchen (21) bestehen, das auf einer Oberseite (22) des Adapters (9) vorgesehen ist, wobei das flexible Klötzchen (21) eine Oberseite (26) und eine Vorderseite (28) enthält, wobei die Ober- (26) und Vorderseite (28) des flexiblen Klötzchens (21) durch eine scharfe Kante (43) verbunden sind.

8. Adapter (9) nach dem vorhergehenden Anspruch, wobei das flexible Klötzchen (21) eine Rückseite (29) gegenüber seiner Vorderseite (28) enthält und die mit seiner Oberseite (26) durch eine Einrichtung (42) verbunden ist, die die Einführung eines Gabelkopfs (10) des Arms (3) erleichtern kann.

9. Adapter (9) nach einem der vorhergehenden Ansprüche, der mit einem Arm zusammenwirken kann, der Einrichtungen (32) zur Translationsführung auf dem Adapter (9) gemäß der Rückziehrichtung enthält, wobei die Führungseinrichtungen (32) gegen den Sicherheitsanschlag (23) in Kontakt kommen, wobei die Translationsführungseinrichtungen (32) gemäß der Rückziehrichtung außerdem zur Montage des Arms (3) auf den Adapter (9) dienen und/oder am Halt des Arms (3) auf dem Adapter (9) beim Übergang von der Nennstellung in die Sicherheitsstellung beteiligt sind.

10. Befestigungsvorrichtung (2), die einen Verbinder (8) und einen Adapter (9) nach einem der Ansprüche 1 bis 9 enthält, der an den Verbinder (8) angelenkt ist.

11. Wischsystem, das einen Arm (3) eines Wischsystems enthält, der dazu bestimmt ist, mit einer Befestigungsvorrichtung (2) nach Anspruch 10 verbunden zu werden, wobei das Wischsystem die Befestigungsvorrichtung (2) enthält.

12. Wischsystem nach dem vorhergehenden Anspruch, wobei der Arm einen Trägergabelkopf enthält, der dazu bestimmt ist, mit der Befestigungsvorrichtung (2) verbunden zu werden, wobei der Gabelkopf seitliche Seiten (34) und Gleitschienen (33) enthält, die im Bereich der seitlichen Seiten (34) vorgesehen sind, wobei die Gleitschienen (33) je durch einen einzigen Knick (37) der seitlichen Seiten (34) des Arms (3) gebildet werden, wobei jede Gleitschiene (33) sich zum Inneren des Arms (3) vorzugsweise gemäß einem Winkel im Wesentlichen gleich 90° bezüglich der seitlichen Seiten (34) erstreckt.

13. Wischsystem nach dem vorhergehenden Anspruch, wobei der Adapter (9) zwei untere Ränder (25) enthält, und wobei die Gleitschienen (33) des Arms (3) den Arm (3) auf dem Adapter (9) in senkrechter Richtung halten können, wobei die Gleitschienen (33) nur die Fläche der unteren Ränder (25) abdecken.

14. Wischsystem nach Anspruch 12 oder 13, wobei die Gleitschienen (33) eine Länge (38) haben, die geringer als der oder gleich dem Abstand (71) ist, der den unteren Punkt (66) vom Sicherheitsanschlag (23) trennt, vorzugsweise strikt geringer.

## Claims

1. An adapter (9) for connecting a wiper blade (1) to a driving arm (3) of a wiper system, said adapter (9) being configured to be connected to a connector (8) with a degree of freedom in pivoting about a pivot pin (14), said adapter (9) comprising maintaining means (20) for maintaining a nominal position of blockage on the arm (3), said adapter (9) being configured to be blocked, in a direction referred to as the direction of withdrawal, situated in a plane perpendicular to the pivot pin (14), in a position of safety in the event of failure of said maintaining means (20), said adapter (9) comprising at least one lateral flange (50) delimited by at least one exterior wall (53) configured to guide the arm (3) in translation, in said direction of withdrawal, and a rear wall (54) situated set back from said exterior wall (53), a safety stop (23) for said position of safety extending laterally outward from said rear wall (54), said adapter (9) comprising a ramp (60) for disengaging the arm (3) connecting said exterior wall (53) and said rear wall (54), **characterized in that** the safety stop (23) is situated at a distance (70) from the end of the ramp in the direction of withdrawal.

2. The adapter (9) as claimed in claim 1, in which the distance (70) separating said ramp (60) from said safety stop (23) is comprised between 0.5 and 3 cm, preferably between 0.6 and 2 cm, more preferably between 0.6 and 1.5 cm.

3. The adapter (9) as claimed in either one of the preceding claims, comprising at least one lower edge (25) situated substantially level with said exterior wall (53), said disengagement ramp (60) extending from a low point (66) situated level with said lower edge (25) of the adapter (9), the distance (71) separating said low point (66) from said safety stop (23) being comprised between 1.5 and 4 cm, preferably between 2 and 3 cm.

4. The adapter (9) as claimed in any one of the preceding claims, in which the safety stop (23) is situated at a rear end of said rear wall (54).

5. The adapter (9) as claimed in any one of the preceding claims, comprising a front face (61) and a rear face (62) which are opposite one another each comprising a slot (63) for the passage of the blade (3), particularly of a deflector (6) of the blade (3).

6. The adapter (9) as claimed in the preceding claim, comprising a second safety stop (23), the slot (63) borne by the rear face (62) of said adapter (9) extending in a direction concurrent with a plane which comprises the two safety stops (23) of the adapter (9) and which is substantially perpendicular to said direction of withdrawal.

7. The adapter (9) as claimed in any one of the preceding claims, in which said maintaining means (20) consist of a flexible stud (21) provided on an upper face (22) of said adapter (9), said flexible stud (21) comprising an upper face (26) and a front face (28), said upper face (26) and front face (28) of said flexible stud (21) being connected by a sharp edge (43).

8. The adapter (9) as claimed in the preceding claim, said flexible stud (21) comprising a rear face (29) opposite to its front face (28) and connected to its upper face (26) by means (42) able to make it easier to introduce a yoke (10) of the arm (3).

9. The adapter (9) as claimed in any one of the preceding claims, able to collaborate with an arm comprising means (32) of translational guidance on the adapter (9) in said direction of withdrawal, said guidance means (32) coming into contact with the safety stop (23), said means (32) of translational guidance, in said direction of withdrawal, also serving when mounting the arm (3) on the adapter (9) and/or contributing to holding the arm (3) on the adapter (9) during the transition from the nominal position to the position of safety.

10. An attachment device (2) comprising a connector (8) and an adapter (9) as claimed in any one of claims 1 to 9, articulated to said connector (8).

11. A wiper system comprising an arm (3) of a wiper system intended to be connected to an attachment device (2) as claimed in claim 10, said wiper system comprising said attachment device (2).

12. The wiper system as claimed in the preceding claim, wherein said arm comprises a supporting yoke intended to be connected to said attachment device (2), said yoke comprising lateral faces (34) and guideways (33) provided at said lateral faces (34), said guideways (33) being formed respectively by a single bend (37) of said lateral faces (34) of the arm (3), each guideway (33) extending toward the inside of the arm (3), preferably at an angle substantially equal to 90° with respect to said lateral faces (34).

13. The wiper system as claimed in the preceding claim, wherein the adapter (9) comprises two lower edges (25), wherein said guideways (33) are able to hold said arm (3) on the adapter (9) in the vertical direction, said guideways (33) covering only the surface of said lower edges (25).

14. The wiper system as claimed in any one of claims 12 or 13, in which said guideways (33) have a length (38) less than or equal to the distance (71) separating said low point (66) from said safety stop (23), preferably strictly less than that distance.
